# EUROPEAN PATENT SPECIFICATION

(11) **EP 0 586 598 B1**
(45) Date of publication and mention of the grant of the patent: **21.12.1994**
(21) Application number: 92913942.6
(22) Date of filing: 22.05.1992
(51) Int. Cl.: B60T 13/74, F16D 65/34

(54) **CABLE OPERATED ELECTROMECHANICAL BRAKE AND SYSTEM THEREFOR**
Vom Kabel betätigte elektro-mechanische Bremse und System dazu
FREIN ELECTROMECANIQUE ACTIONNE PAR CABLE ET SON SYSTEME

(30) Priority: 31.05.1991 US 708540
(43) Date of publication of application: 16.03.1994
(73) Proprietor: AlliedSignal Inc., Morristown, New Jersey 07962-2245 (US)
(72) Inventor: CASEY, Gary, L., Troy, MI 48098 (US); VERNER, Douglas, Robert, Sterling Heights, MI 48078 (US)
(74) Representative: Bentz, Jean-Paul
(86) International application number: US9204347
(87) International publication number: WO9221542

(56) References cited:
- EP-A- 0 385 620
- WO-A-90/06877
- US-A- 4 629 043
- Patent Abstacts of Japan vol. 13, no. 33 (M-789) 1988, & JP-A-63242764, (AISIN SEIKI CO LTD)
- Patent Abstracts of Japan vol. 15, no. 186 (M-1112) 1991, & JP-A-3045462 (HONDA MOTOR CO LTD)

## Description

### BACKGROUND AND SUMMARY OF THE INVENTION

The present invention generally relates to a brake system and more particularly to a cable actuated drum brake which does not include a hydraulic cylinder and which is capable or performing both as a service brake and a parking brake.

U.S. Patent 4 629 043 is illustrative of an electrically operated system for engaging and disengaging a parking brake. This system includes a reversible electric motor a gear device and a cable which connects the gear device to the brakes, typically drum brakes and uses a variety of sensors to sense engine parameters such as engine speed and vehicle operating parameters such as vehicle speed and vehicle orientation. Each sensor output is analyzed and manipulated in an associated electronic contoller which determines when to apply and release the parking brake. Further, parking brake systems often use drum brakes which display a high mechanical advantage which generate a high energization level thus requiring a smaller activation force as compared to disc brakes. This high mechanical advantage however gives rise to one disadvantage of a drum brake in that they are often difficult for a typical operator to control. This problem becomes more pronounced in a lightly loaded vehicle using rear drum brakes.

It is an object of the present invention to provide a rear drum brake and activation system in the which all hydraulic components and mechanical proportioning valves are eliminated. A further object of the present invention is to provide a cable actuated drum brake-motor control system which can function as a service brake as well as a parking brake. One advantage of the present invention is its ability to compensate for variations in drum braking performance making the vehicle more controllable. As will be seen from the description below, drum brakes lend themselves to cable actuation because they require considerably less actuation force than disc brakes. While the preferred embodiment of the invention shows a drum brake related system the invention is not so limited as it can be applied to the control of a cable activated disc brake. An additional advantage of using a drum brake is that the required motor capacity is lower than that required to activate a disc brake.

Accordingly the invention comprises a method and system for operating a brake without the need of hydraulic components. More specifically, the invention employs a drum brake of the type including two brake shoes biased by springs away from a drum, a brake link having a first end and second end, the first end pivoted on a first shoe and a brake strut connecting the shoes. A cable is connected to the second end of the brake link. A motor and associated gear device is connected to the other end of the cable for increasing and decreasing the tension in the cable to activated and deactivate the brake. By selectively controlling the tension in the cable the brake, under motor control can operate in either a parking or service brake mode of operation. In general, the method disclosed to operate the present invention as a service brake comprises the the following steps: calibrating the system and operating the system. The step of calibrating includes the steps of: rotating the motor in a first direction to increase the tension in the cable; monitoring a first parameter to determine when the brake is applied; stopping the motor when the first parameter has reached a desired value; commanding the motor to rotate in a reverse direction a predetermined number of turns to reduce cable tension and release the brake; zeroing a motor turns indicator after the motor has rotated the predetermined number of turns to establish a motor turns reference point. Thereafter the cable tension is increased or decreased in correspondence to an operator applied braking effort signal to generate the appropriate service brake torque. To operate the brake in its parking brake mode of operation the motor and gear device are operated to achieve a constant tension in the cable. An alternate embodiment of the invention discloses a brake strut in the form of a lever mechanism with the cable secured to one end of the lever mechanism.

Many other objects and purposes of the invention will be clear from the following detailed description of the drawings.

### BRIEF DESCRIPTION OF THE DRAWINGS

In the drawings:
FIGURE 1 illustrates a block diagram showing many of the components of the present invention.
FIGURE 2 illustrates a control system.
FIGURE 3 illustrates one motor design which may be incorporated within the present invention.
FIGURE 4 illustrates an alternate embodiment of the invention.

### DETAILED DESCRIPTION OF THE DRAWINGS

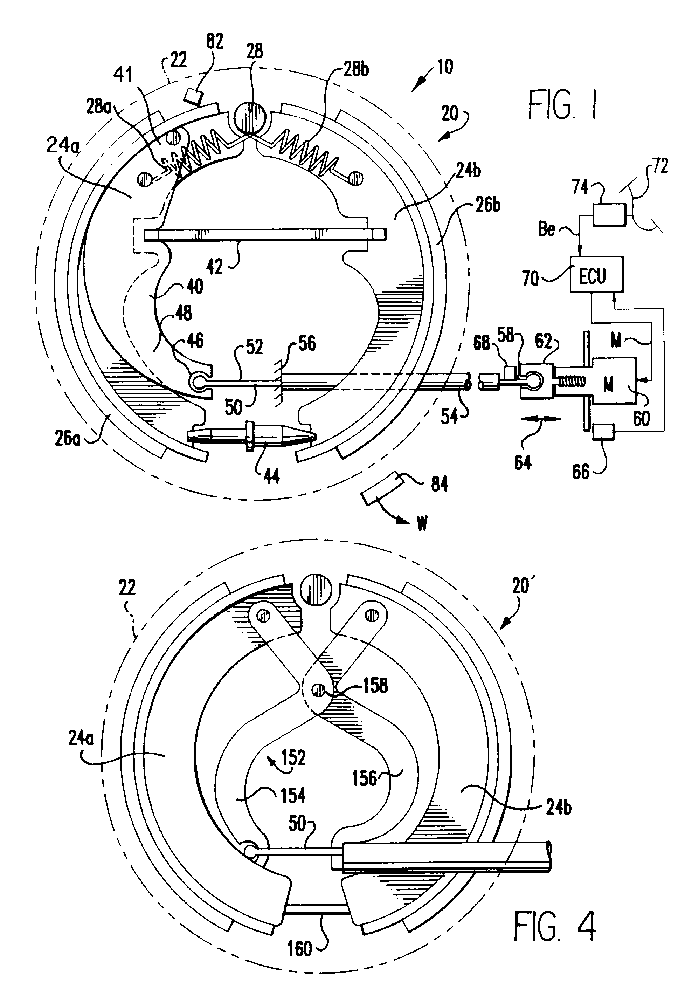

FIGURE 1 shows a brake system 10 incorporating the current invention. There is shown a brake drum 20 comprising a drum 22 and a plurality of brake shoes 24a and 24b carrying friction material 26a,b. Each of the brake shoes 24a,b is biased inwardly relative to a torque reaction post 28 by springs 28a and 28b respectively. A brake link 40 (such as a parking brake link) is pivoted at one end to one of the brake shoes such as 24a. The brake link is connected to the other brake shoe such as 24b by a brake strut 42. The lower portions of the brake drum can be joined by a self adjusting link mechanism 44. It should be appreciated that the hydraulic cylinder used to actuate the various brakes shoes 24a,b, during service brake operation, has been eliminated from the drum brake.

A cable 50 is secured within a socket 46 of the brake link 40 at one end 52. The cable is movable within a cable sheath 54 which may be suitably anchored to the brake backing plate schematically shown as 56 or to a brake shoe. The other end of the cable 58 is moved by a motor/gear device generally shown as 60 and 62 in response to control signals generated by an electric control unit (ECU) 70. In the preferred embodiment of the invention, the motor M is a reversible electric motor. A gear device 62 which could be part of the motor is attached to a shaft of a motor to translate the rotational motion of the motor into a linear motion as shown by arrow 64. As shown the end 58 of the cable is attached to this gear device 62.

As will be appreciated the system 10 uses a closed loop motor control. In order to control the normal service brake operation of the brake system 10, it is desirable to generate a signal indicative of the braking force generated between the brake shoes 24a,b and the drum 22. It would be difficult to generate a signal which measures this quantity directly. Such a braking force signal could be determined by measuring the reaction torque imparted by the brake shoes on the torque reaction post 28 by using strain gages or the like. This signal can be generated indirectly in a number of ways. One method is to use a turns counter 66 to measure the number of turns of the motor from a reference point, discussed below. The turns counter 66 could comprise two Hall effect devices, of known construction, typically located 90 degrees apart, integrated in the motor 60 to give direction and number of turns information. Alternatively, the turns counter 66 could be an external sensor and wheel. Turns counts and directional information are stored in registers in the ECU 70 which would store a number indicative of the absolute or total angular positions of the motor. By measuring the number of turns of the motor the effective linear translation of the gear device 62 and cable 50 can be determined. The retractive motion of the cable will cause a cable force to be imparted to the end 48 of the link 40 to controllably activate the cable 20. This force can be calculated empirically knowing the mechanical advantage of the brake 20, that is brake force in terms of cable deflection, as well as the mechanical advantage of the gear device 62 and the correlation between cable tension and actual brake torque. Alternatively, it can be shown that the tensile force in the cable 50 is directly related to brake force. Cable force can be measured by utilizing a strain sensor such as 68 attached to the cable or by monitoring motor current.

The general operation of the system 10 is as follows. In response to a signal indicative of operator applied brake effort, Be, to a brake pedal 72 the ECU 70 will generate motor control signal M, which is used to cause the motor to rotate in a manner to increase or decrease cable tension by a predetermined amount thereby causing a determinable braking force to be generated within the brake 20. A force transducer such as 74 can be used to the operator applied braking force. Alternatively, if the front brakes of the vehicle are hydraulic a pressure sensor (not shown) can be used to measure operator applied brake effort, to the front wheels, which is then used by the ECU 70 to generate the motor control signal. In general the motor 60 is rotated to either cause the cable to increase the cable force or to reduce same in correspondence with variation in the operator applied braking effort. As the motor is turned to reduce cable force the springs 29a,b will become more effective thereby urging the friction material 26a,b away from the drum 22 reducing the generated brake force at the brake 20.

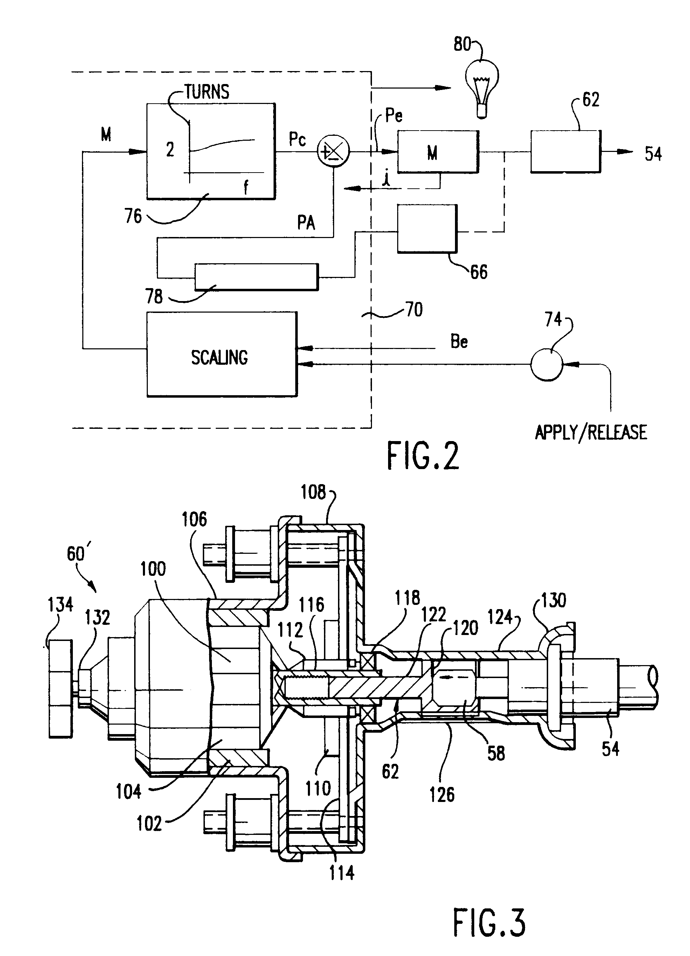

Reference is made to FIGURE 2 which illustrates a control system usable with the present invention. The input signals to the ECU 70 are the braking effort Be and a parking brake release/apply signal generated by an operator activated switch 74. As the present invention is more apply suited to control the braking performance of rear vehicle brakes, the brake effort signal Be is appropriately scaled to account for front-to-rear brake proportioning. The motor control signal M is generated in terms of desired brake force. The ECU 70 may include a stored function generator such as block 76 which relates actual brake force to the number of turns of the motor, i.e. cable position. The output of block 76 is a position command signal Pc representative of the commanded number of motor turns. The commanded motor position as compared to actual motor position (i.e., number of counts) to generate an error signal which is used to actuate the motor. Actual position is sensed by the turns counter 66 which is appropriately conditioned for use by the ECU 70 A/B conversion and filtering if required. The ECU may store turns information, i.e., motor position, in a turns counter register such as 78.

When it is desired to use the brake 20 as a parking brake, the operator may apply parking brake switch 74 causing the motor to rotate in the first direction to permanently activate the brake 20. This can be accomplished by rotating the motor to a position to generate a sufficient cable tension and reaction of the shoes 24a,b against the drum 22. Upon activation of the brake 20 in its parking brake function the ECU may generate a signal to activate a lamp or other indicator 80 to inform the operator that the parking brake is applied. Subsequent activation of the switch 74 can be used to cause the motor to rotate in the reverse direction releasing the brake 20 from its parking brake function.

The following is a more detailed description of the operation of the invention. Assuming first that the brake 20 is applied and functioning as a parking brake the system 10 must first release the parking brake and then prepare itself for operation of the system in its service brake mode. Upon application of switch 74 the ECU 70 will cause the motor to rotate in a reverse direction thereby releasing the brake 20 from its parking brake mode of operation. However, prior to deactivating indicator 80 the ECU 70 will cause the system 10 to initiate a self-calibration procedure. This procedure is initiated to remove any amount of unknown slack in the cable 52 so that during service brake operation there is a direct correspondence between the angular displacement of the motor 60 (motor turns) and the displacement of and tension in the cable 50. The ECU 70 will cause the motor 60 to rotate in a first or cable apply direction to increase the tension in the cable to a point where the brake shoes 24a,b lightly contact the drum 22. This condition can be sensed in a number of ways. One way is to monitor motor current which will increase as motor load and cable tension increases. When motor current increases to a predetermined level, this will be indicative that the cable 50 has moved the shoes into contact with the drum 22. When this situation is reached the motor 60 is stopped. The indication that the brake shoes 24a,b have moved into contact with the drum 22 can also be sensed by measuring the tension in the cable by using a transducer such as 68. Alternatively, a contact switch or sensor 82 may be incorporated within the drum brake 20 to indicate this lightly contacting position. Having placed the shoes 24a,b in contact with the drum 22, the motor 60 is rotated in a reverse direction a relatively small number of turns such as 2-4 (depending upon the mechanical advantage of the entire system) to provide for an adequate running clearance between the friction material 26a,b and the drum 22. This position represents the reference zero or base position for operation of the system in its service braking mode. After the motor 60 has been rotated the ECU 70 zeros the motor turns indicator 78 and the indicator 80 is turned off.

The system 10 is now ready to operate in its service braking mode of operation. In response to a braking effort signal generated by sensor 74, the ECU appropriately scales this signal to generate the motor control signal M in terms of desired braking force. The motor control signal is operated upon such as by the stored functional relationship in block 76 to generate the position control signal. The position control signal is compared to the angular displacement Pa of the motor (number of turns) to generate an error signal Pe causing the motor 60 and gear device 62 to move to increase or decrease cable tension in accordance with the brake effort signal Be thereby generating the desired braking force at the brake or brakes 20.

As can be appreciated the closed loop position control signal illustrated in FIGURE 1 is but one way of generating a desired brake force at the brake 20. If the vehicle is equipped with a wheel speed sensor or indicator such as 84 an alternate mode of service brake operation can be utilized. When an operator applies a force to the brake pedal 72 various brakes are appropriately applied which in turn causes the controlled deceleration of the vehicle. If the brake activation signal Be is scaled, in the ECU 70, in terms of desired vehicle deceleration then the system 10 would monitor the deceleration of the vehicle as indicated by the output of the wheel speed sensor (s) 84 to generate a deceleration error control signal. This error signal with appropriate scaling to convert same from deceleration to desired motor current or other parameter may be used to command the motor in a manner similar to that described above. The concept of using command signals representative of vehicle deceleration are used in adaptive or antilock braking system to prevent the slipping or skidding of the vehicles wheel. These antilock systems only use deceleration control during antilock operation and not during normal service braking however, the method of generating such a signal is well known and not discussed further.

The calibration procedure described above need not be limited to a procedure initiated only after the parking brake is deactivated. As an example, each time the contact switch 82 is activated during application of the service brakes or when the tension in the cable 50 is sufficient to cause the brake shoes 24,a,b to engage the drum 22, the ECU 70 can momentarily zero the turns register 78. In this manner the calibration procedure is an ongoing one which compensates on a real time basis for the wearing, repositioning, etc. of the various parts of the system.

FIGURE 3 illustrates a DC motor 60' which may be used within the present invention. The motor comprises an armature 100 and a plurality of stationary magnets 102 separated by an air gap 104. The motor 60 includes a plurality of brushes 110 and commutator 112. Secured between the motor housing 106 and the gear encasement 108 is a PC (printed circuit) board 114 which may incorporate associated electronics for the motor such as Hall effect devices and other componentry. In this manner the electronic components of the motor are shielded from the external environment. Extending from the motor armature 100 is a motor shaft 116 having an internal thread. A buttress or acme thread is preferred as both will exhibit a high mechanical advantage which is used to activate the cable. Such a thread design will not permit the motor to be back driven. The motor shaft 116 may be supported by a bushing 118 secured to the gear encasement 108. Slideably positioned within the motor encasement is the gear mechanism 62 which may include a lead screw 122 having exterior threads. A socket 120 extends from one end of the lead screw 122 into which is received one end 58 of the cable. The socket 120 is designed to slide within a mating portion 124 of the gear encasement and must be prohibited from rotating with the armature. Various means for preventing the socket 120 from rotating can be utilized such as using a spline connection 126, a key or other means as known in the art. The cable sheath 54 is secured to an extending end 130 of the gear encasement 108. The motor 60 is provided at its opposite end 132 with a means for manually rotating the armature in the event that the motor is inoperative. Such means, generally shown as 134, may include a socket or similar coupling which when turned causes the armature to rotate thereby moving the lead screw to the right (as shown in FIGURE 3) to release cable tension on the brake link 40 to release the brake shoes from the drum.

Reference is made to FIGURE 4 which illustrates an alternate embodiment of the invention. More specifically, there is shown a drum brake 20' having a drum 22, brake shoes 24a,b and a brake link in the form of a lever mechanism 152. The various springs such as 28a,b have been removed for clarity. The lever mechanism 152 includes two arms 154 and 156 which are pivotably joined together at 158. One end of the first arm 154 is pivoted to a brake shoe such as 24a, the other end of the arm 154 is secured to the end of the cable 50. Similarly, one end of arm 156 is pivoted to the other brake shoe 24b. As shown the cable sheath 54 is secured to the other end of arm 156. It should be appreciated that the sheath could be connected to the backing plate or to the brake shoe 24b. Further, the self-adjusting mechanism 44 shown in FIGURE 1 has been replaced by a fixed link 160. This could have also been done in the brake shown in FIGURE 1. One known characteristic of drum brakes is that they do not generate an equal magnitude of brake torque, under the same operating conditions, when the vehicle is moving forward or in reverse. The use of the brake link lever mechanism 150 in conjunction with the remainder of the drum brake should provide for the more even generation of brake torque by the two brake shoes 24a,b. The operation of the drum brake 20' is essentially the same as that described above. In operation as the tension in the cable 50 is increased the arms 154 and 156 rotate about the pivot point 158 urging the shoes into the drum.

Many changes and modifications in the above described embodiment of the invention can, of course, be carried out without departing from the scope thereof. Accordingly, that scope is intended to be limited only by the scope of the appended claims.

## Claims

1. A method of controlling a service brake in a system (10) comprising a drum brake (20) of the type including two brake shoes (24) biased by springs (29a,b) away from a drum, brake linkage means (40, 42, 152, 154) interconnecting the shoes for activating same, a cable (50) connected to the brake linkage means, and first means (60,66) including a motor (60) and gear device (62) for increasing and decreasing the tension in the cable to activate and deactivate the brake, comprising the steps of:
1.1 calibrating the system (10) and
1.2 operating the system, characterized in that step 1.1 further includes:
1.1.1 rotating the motor (60) in a first direction to increase the tension in the cable (50),
1.1.2 monitoring a first parameter to determine when the brake is applied;
1.1.3 stopping the motor (60) when the first parameter has reached a desired value;
1.1.4 commanding the motor to rotate in a reverse direction a predetermined number of turns to reduce cable tension and release the brake;
1.1.5 zeroing a motor turns indicator to establish a motor turns reference point.

2. The method as defined in Claim 1 wherein step 1.2 of operating includes the steps of:
2.1 monitoring a signal indicative of operator applied braking effort,
2.2 generating a motor control signal proportional to desired braking effort,
2.3 rotating the motor to increase or decrease cable tension by an amount to generate a desired service braking force in the brake, and wherein
step 1.1.2 includes monitoring motor current and wherein
step 1.1.3 includes stopping the motor when motor current has increased to a value indicative of the fact that the brake shoes are applied against the drum; and wherein
step 1.1.1 includes rotating the motor in the first direction by the predetermined number of turns to cause an increased cable tension to cause the brake shoes to lightly contract the drum, in response to a calibration level of the motor control signal; and wherein step 1.1.2 includes monitoring cable tension and step 1.1.3 includes stopping the motor when the cable tension has increased to a value indicating that the brake shoes are applied against the drum.

3. The method as defined in Claim 2 wherein step 2.3 further includes the step of:
3.1 rotating the motor to a position corresponding to a stored relationship of motor angular displacement versus brake torque.

4. The method as defined in Claim 1 wherein the drum brake includes a sensor which generates a signal when a brake shoe is in contact with the drum and wherein step 1.1.2 includes monitoring the sensor signal and step 1.1.3 includes stopping the motor when the sensor indicates the shoes are in contact with the drum.

5. The method as defined in Claim 1 including the steps of:
5.1 generating a parking brake apply signal;
5.2 rotating the motor in the first direction to increase cable tension to an amount to apply the brake;
5.3 stopping the motor to maintain cable tension;
5.4 generating a parking brake release signal;
5.5 rotating the motor in the reverse direction by an amount to reduce cable tension sufficient to release the brake and thereafter repeat the steps 1.1 through 1.2.3.

6. The method as defined in Claim 2 wherein step 2.2 includes generating a motor command signal in terms of desired deceleration of a braked wheel, and wherein the method includes:
6.1 generating a signal indicative of wheel deceleration and wherein step 2.3 includes rotating the motor to vary cable tension by an amount sufficient to cause the wheel to decelerate at the desired level.

7. A brake system (10) for providing both service brake and parking brake function, comprising
a drum brake (20) of the type comprising two brake shoes (24) biased by springs (28) away from a drum (22), brake linkage means (40,42,152,154) interconnecting the shoes for activating same,
first means including a reversible electric motor (60) responsive to a control signal indicative of desired braking effort, and gear means (62) for converting the rotary motion of the motor (60) into linear motion,
a cable (50) connected at one end to the first means and at its other end to the brake linkage means (40, 42, 152, 154) such that as the motor turns in a first direction the cable is drawn tight to apply a force to the brake linkage means to cause activation of the drum brake;
second means (70) for generating the control signals to activate the motor.

8. The system as defined in Claim 7 wherein the cable force is related to operator applied braking effort to a brake pedal (72) to enable the system to operate as a service brake such that the torque developed by the brake is controlled.

9. The system as defined in Claim 7 including means for counting the number of turns of the motor and means, responsive to the number of turns for generating a signal indicative of the angular position of the motor.

10. The system as defined in Claim 7 wherein the second means generates a motor control signal in response to a command signal indicative of operator desired brake activity and motor position to generate a signal communicated to the motor to cause same to rotate a determinable number of turns and a signal to cause the motor to rotate in a desired direction.

11. The system as defined in Claim 11 including means for generating a signal to cause the motor to operate to apply the brake as a parking brake, wherein in response to such signal the motor is caused to turn to establish a constant tension in the cable and means for removing any slack in the cable by causing the second means to generate a signal to the motor to cause it to rotate to increase cable tension to place the shoes in contact with the drum and thereafter to cause the motor to rotate in a reverse number or turns to establish a zero position.

## Patentansprüche

1. Verfahren zum Ansteuern einer Betriebsbremse in einem System (10) mit einer Trommelbremse (20) des Typs mit zwei Bremsschuhen (24), die von Federn (29a,29b) von einer Trommel weg vorgespannt werden, mit Bremsgelenkmitteln (40, 42; 152,154), welche die Bremsschuhe zu deren Betätigung verbinden, einem Seil (50), das mit den Bremsgelenkmitteln verbunden ist, und mit ersten Mitteln (60,66) mit einem Motor (60) und einem Getriebe (62) zum Erhöhen und Verringern der Seilspannung, um die Bremse zu betätigen und zu lösen, mit folgenden Schritten:
1.1 das System (10) wird kalibriert und
1.2 das System wird in Betrieb gesetzt, dadurch gekennzeichnet, daß der Schritt 1.1 ferner aufweist:
1.1.1 der Motor (60) wird in einer ersten Richtung gedreht, um die Spannung im Seil (50) zu erhöhen;
1.1.2 ein erster Parameter wird überwacht, um zu bestimmen, wann die Bremse angelegt ist;
1.1.3 der Motor (60) wird angehalten, wenn der erste Parameter einen bestimmten Wert erreicht hat;
1.1.4 es wird der Befehl gegeben, daß der Motor in Rückwärtsrichtung eine bestimmte Anzahl von Umdrehungen rotiert, um die Seilspannung zu verringern und die Bremse zu lösen;
1.1.5 ein Motorumdrehungsanzeiger wird auf Null gestellt, um einen Motorumdrehungs-Referenzwert zu erhalten.

2. Verfahren nach Anspruch 1, bei dem der Schritt 1.2 für den Betrieb folgende Schritte aufweist:
2.1 Ein Signal wird überwacht, das die vom Bediener ausgeübte Bremsanforderung anzeigt;
2.2 ein der gewünschten Bremsanforderung proportionales Motorsteuersignal wird erzeugt;
2.3 der Motor wird rotiert, um die Seilspannung um einen Betrag zu vergrößern oder zu verkleinern, um eine gewünschte Betriebsbremskraft in der Bremse zu erzeugen und wobei
Schritt 1.1.2 ein Überwachen des Motorstroms beinhaltet und wobei
Schritt 1.1.3 ein Anhalten des Motors beinhaltet, wenn der Motorstrom einen Wert erreicht hat, der anzeigt, daß die Bremsschuhe an die Trommel angelegt sind und wobei
Schritt 1.1.1 beinhaltet, daß der Motor in der ersten Richtung um eine vorbestimmte Anzahl von Umdrehungen rotiert wird, um eine vergrößerte Seilspannung zu erhalten, mit der die Bremsschuhe leicht an die Trommel angelegt werden entsprechend einem Kalibrierungswert des Motorsteuersignals und wobei Schritt 1.1.2 das Überwachen der Seilspannung beinhaltet und Schritt 1.1.3 das Anhalten des Motors beinhaltet, wenn die Seilspannung sich auf einen Wert vergrössert hat, der anzeigt, daß die Bremsschuhe an die Trommel angelegt sind.

3. Verfahren nach Anspruch 2, bei dem der Schritt 2.3 ferner enthält:
3.1 Der Motor wird in eine Position gedreht, die einem gespeicherten Verhältnis der Motorwinkelbewegung zum Bremsmoment entspricht.

4. Verfahren nach Anspruch 1, bei dem die Trommelbremse einen Sensor aufweist, der ein Signal erzeugt, wenn ein Bremsschuh in Kontakt mit der Trommel ist und wobei der Schritt 1.1.2 ein Überwachen des Sensorsignals beinhaltet und Schritt 1.1.3 das Anhalten des Motors beinhaltet, wenn der Sensor anzeigt, daß die Schuhe in Kontakt mit der Trommel sind.

5. Verfahren nach Anspruch 1 mit folgenden Schritten:
5.1 Es wird ein Signal zum Anlegen der Feststellbremse erzeugt;
5.2 der Motor wird in der ersten Richtung gedreht, um die Seilspannung auf einen Betrag zu erhöhen, um die Bremse einzurücken;
5.3 der Motor wird angehalten, um die Seilspannung aufrechtzuerhalten;
5.4 ein Signal zum Lösen der Feststellbremse wird erzeugt;
5.5 der Motor wird in Rückwärtsrichtung um einen Betrag gedreht, um die Seilspannung soweit zu verringern, daß die Bremse löst und dann werden die Schritte 1.1 bis 1.2.3 wiederholt.

6. Verfahren nach Anspruch 2, bei dem der Schritt 2.2 beinhaltet das Erzeugen eines Motorbefehlsignals, ausgedrückt als gewünschte Verzögerung eines gebremsten Rades und bei dem das Verfahren beinhaltet:
6.1 Ein Signal wird erzeugt, das eine Radverzögerung anzeigt, wobei Schritt 2.3 beinhaltet das Drehen des Motors, um die Seilspannung um einen Betrag zu ändern, der ausreicht, daß das Rad mit dem gewünschten Wert verzögert.

7. Bremssystem (10) für eine Betriebsbremse und Feststellbremse mit einer Trommelbremse (20) des Typs mit zwei Bremsschuhen (24), die von Federn (28) von einer Trommel (22) weg vorgespannt sind, Bremsgelenkmitteln (40,42, 152, 154), die die Schuhe zu deren Betätigung miteinander verbinden, mit ersten Mitteln einschließlich einem umkehrbaren Elektromotor (60), der auf ein Steuersignal anspricht, das eine gewünschte Bremsanforderung anzeigt und mit einem Getriebe (62) zum Umsetzen der Drehbewegung des Motors (60) in eine lineare Bewegung, mit einem Seil (50), das an einem Ende mit den ersten Mitteln und am anderen Ende mit den Bremsgelenkmitteln (40,42, 152, 154) derart verbunden ist, daß beim Drehen des Motors in einer ersten Richtung das Seil straff gezogen wird, um eine Kraft auf die Bremsgelenkmittel auszuüben und die Betätigung der Trommelbremse zu veranlassen und mit zweiten Mitteln (70) zum Erzeugen der Steuersignale zum Aktivieren des Motors.

8. System nach Anspruch 7, bei dem die Seilkraft auf die vom Bediener auf ein Bremspedal (72) ausgeübte Bremsanforderung bezogen ist, um das System in die Lage zu versetzen, als Betriebsbremse derart zu arbeiten, daß das von der Bremse ausgeübte Drehmoment geregelt wird.

9. System nach Anspruch 7, mit Mitteln zum Zählen der Umdrehungen des Motors und mit Mitteln zum Erzeugen eines die Winkellage des Motors anzeigenden Signals entsprechend der Anzahl der Umdrehungen.

10. System nach Anspruch 7, bei dem die zweiten Mittel ein Motorregelsignal abhängig von einem Befehlssignal erzeugen, das die vom Bediener gewünschte Bremsbetätigung und Motorposition anzeigt, um ein Signal zu erzeugen, das dem Motor zugeleitet wird, damit dieser eine vorbestimmbare Anzahl von Umdrehungen ausführt, und ein Signal, damit der Motor in der gewünschten Richtung dreht.

11. System nach Anspruch 11, mit Mitteln zum Erzeugen eines Signals, damit der Motor die Bremse als Feststellbremse betätigt, wobei abhängig von einem derartigen Signal der Motor dreht, um eine konstante Spannung im Seil hervorzurufen und mit Mitteln zum Beseitigen von Schlappseil, indem die zweiten Mittel ein Signal für den Motor erzeugen, damit dieser rotiert, so daß die Seilspannung vergrößert wird, um die Schuhe in Kontakt mit der Trommel zu bringen und worauf der Motor in Rückwärtsrichtung mehrere Umdrehungen ausführt, um eine Nullposition zu erhalten.

## Revendications

1. Méthode pour la commande d'un frein de service dans un système (10) comprenant un frein à tambour (20) du type comportant deux patins de frein (24) écartés du tambour par des ressorts (29a, 29b), unmoyen de liaison de frein (40,42,152,154) reliant les patins pour les actionner, un câble (50) relié au moyen de liaison de frein et un premier moyen (60,66) comprenant un moteur (60) et un moyen d'entraînement (62) pour augmenter ou réduire la tansion dans le câble pour activer ou désactiver le frein,comprenant les étapes suivantes de
1.1 calibration du système (10) et
1.2 manoeuvre du système, caractérisée en ce que l'étape 1.1 comporte en outre :
1.1.1 la rotation du moteur (60) dans un premier sens pour augmenter la tension du câble (50);
1.1.2 le contrôle d'un premier paramètre pour déterminer quand le frein est serré;
1.1.3 l'arrêt du moteur (60) lorsque le premier paramètre à atteint une valeur désirée;
1.1.4 la commande de rotation du moteur en sens inverse d'un nombre de tours prédéterminé pour réduire la tension du câble et desserer le frein;
1.1.5 la remise à zéro d'un indicateur de tours du moteur pour établir un point de référence tours moteur.

2. Méthode selon la revendication 1, dans laquelle l'étape 1. 2 de fonctionnement comprend les étapes suivantes :
2.1 le contrôle d'un signal indiquant l'effort de serrage du frein effectué par le conducteur,
2.2 la création d'un signal de commande du moteur proportionnel à l'effort de serrage souhaité,
2.3 la rotation du moteur pour accroître ou réduire la tension du câble d'une valeur qui génère l'effort de freinage de service souhaité sur le frein, et dans laquelle
l'étape 1.1.2 comporte la commande d'un courant moteur et
l'étape 1.1.3 comporte l'arrêt du moteur lorsque le courant du moteur s'est accru jusqu'à une valeur indiquant que les patins de freins sont appliqués contre le tambour; et
l'étape 1.1.1 comporte la rotation du moteur dans un premier sens du nombre prédéterminé de tours pour provoquer un accroissement de la tension du câble qui amène les patins au contact léger avec le tambour, tambour à un niveau de calibrage du signal de commande du moteur; et dans laquelle l'étape 1.1.2 comporte le contrôle de la tension du câble et l'étape 1.1.3 comporte l'arrêt du moteur lorsque la tension du câble à augmenté jusqu'à une valeur indiquant que les patins de freins sont appliqués contre le tambour.

3. Méthode selon la revendication 2 dans laquelle l'étape 2.3 comporte en outre l'étape de:
3.1 la rotation du moteur jusqu'à une position correspondant au rapport du déplacement angulaire du moteur opposé au couple de freinage.

4. Méthode selon la revendication 1 dans laquelle le frein à tambour inclut un détecteur qui génère un signal lorsqu'un patin de frein est au contact du tambour et dans laquelle l'étape 1.1.2 comporte le contrôle du signal du détecteur et l'étape 1.1.3 comprend l'arrêt du moteur lorsque le détecteur indique que les patins sont en contact avec le tambour.

5. Méthode selon la revendication 1 comportant les étapes de:
5.1 la création d'un signal d'application de frein de stationnement;
5.2 la rotation du moteur dans le premier sens pour accroître la tension du câble jusqu'au serrage du frein;
5.3 L'arrêt du moteur pour maintenir la tension du câble ;
5.4 la création d'un signal de desserrage du frein de stationnement;
5.5 La rotation du moteur en sens inverse d'une valeur suffisante pour réduire la tension du câble et désserrer le frein et ensuite répéter les étapes 1.1 via 1.2.3.

6. Méthode selon la revendication 2 dans laquelle l'étape 2.2 comprend la création d'un signal de commande du moteur en termes de décélération souhaitée d'une roue freinée, et dans laquelle la méthode comporte :
6.1 la création d'un signal indicateur de décélération de roue dans laquelle l'étape 2.3 comporte la rotation du moteur pour modifier la tension du câble d'une valeur suffisante pour provoquer le niveau souhaité de décélération de la roue.

7. Système de frein (10) assurant les deux fonctions de frein de service et de frein de stationnement, comprenant:
un frein à tambour (20) du type incluant deux patins de frein (24) écartés du tambour (22) par des ressorts (28), un moyen de liaison de frein (40,42,152,154) reliant les patins pour les actionner,
un premier moyen comprenant un moteur électrique réversible (60) répondant à un signal de commande indiquant l'effort de serrage souhaité, et un moyen d'entraînement (62) pour convertir le mouvement rotatif du moteur (60) en mouvement linéaire,
un câble (50) relié à une extrémité au premier moyen (62) et à l'autre extrémité au moyen de liaison de frein (40,42,152,154) tel que lorsque le moteur tourne dans un premier sens,le câble est tendu pour appliquer une force au moyen de liaison de frein et provoquer le serrage du frein à tambour;
un second moyen (70) pour engendrer les signaux de commande pour actionner le moteur.

8. Système selon la revendication 7 dans lequel la force du câble est en relation avec l'effort de pression du conducteur sur une pédale de frein (72) pour permettre au système de fonctionner comme un frein de service où le couple développé par le frein est controllé.

9. Système selon la revendication 7 comportant un moyen pour compter le nombre de tours du moteur et un moyen sensible au nombre de tours poue générer un signal indiquant la position angulaire du moteur.

10. Système selon la revendication 7, dans lequel le second moyen génère un signal de commande du moteur en réponse au signal de commande indiquant la pression de frein souhaitée par le conducteur et la position du moteur pour générer un signal transmis au moteur et en provoquer la rotation d'un nombre de tours déterminé et un signal pour provoquer la rotation du moteur dans le sens souhaité.

11. Système selon la revendication 7 comprenant un moyen pour générer un signal qui provoque la rotation du moteur pour serrer le frein comme un frein de stationnement, dans lequel en réponse à un tel signal le moteur est entraîné en rotation pour assurer une tension constante dans le câble et un moyen pour annuler tout le mou du câble en faisant générer par le second moyen un signal vers le moteur qui en provoque la rotation pour accroître la tension du câble et amener les patins en contact avec le tambour et par la suite provoquer la rotation du moteur d'un nombre de tours inverse pour établir une position zéro.
